# EUROPEAN PATENT SPECIFICATION

(11) **EP 0 519 857 B1**
(45) Date of publication and mention of the grant of the patent: **04.01.1995**
(21) Application number: 92500079.6
(22) Date of filing: 18.06.1992
(51) Int. Cl.: B62B 9/12, B62B 7/14

(54) **Seat for children's pushchair**
Sitz für Kinderwagen
Siège pour poussette d'enfant

(30) Priority: 20.06.1991 ES 9101468
(43) Date of publication of application: 23.12.1992
(73) Proprietor: JANE S.A., E-08184 Palau de Plegamans (Barcelona) (ES)
(72) Inventor: Jane Cabagnero, Ramón, c/o Jané S.A., E-08184 Palau de Plegamans, Barcelona (ES)
(74) Representative: Pastells Teixido, Manuel

(56) References cited:
- DE-A- 3 333 545
- FR-A- 1 277 689

## Description

The present invention relates to a seat for children's pushchairs.

There are different models of children's pushchairs, generally folding and which comprise attached to the chassis thereof a fixed or removable seat which generally consists of two wing members acting as armrests and between which there is attached a seat board and a hinged backrest which may slope at different angles through to a practically horizontal folddown position.

The problem with these seats is that the seat board is installed in a fixed fashion practically horizontal and when the backrest is tilted backwards, the child tends to slide forwardly along the seat, making it uncomfortable for him and the mother or person who is wheeling the baby has frequently to pull him up to seat him in a correct position.

Arranging the seat board sloping backwards does not solve the problem since when the backrest is practically vertical, the child would be squeezed forward and, furthermore, when the backrest is folded down to a bed position, the necessary horizontality for the comfort and good rest of the child is not attained.

The solution is to achieve a seat board adopting different degrees of slope, moving from a greater to a lesser slope as the backrest is folded backwards.

This solution is provided by the seat of the invention and to this end the seat board is pivotably installed at the front end thereof between the two wing members of the seat, while at the rear end thereof said seat board is hingedly associated with the lower portion of the backrest frame, which association is effected through slots and below the axis of hinging of said frame to the wing members of the seat.

The backrest frame may be extended laterally on respective portions having transverse spigots which move in the slots provided in parts fixedly attached to the rear of the seat board.

These and other features will be better understood from the following detailed description, to facilitate which there is attached a sheet of drawings in which one embodiment, given only as a non limiting example of the scope of the present invention, is illustrated.

In the drawings:

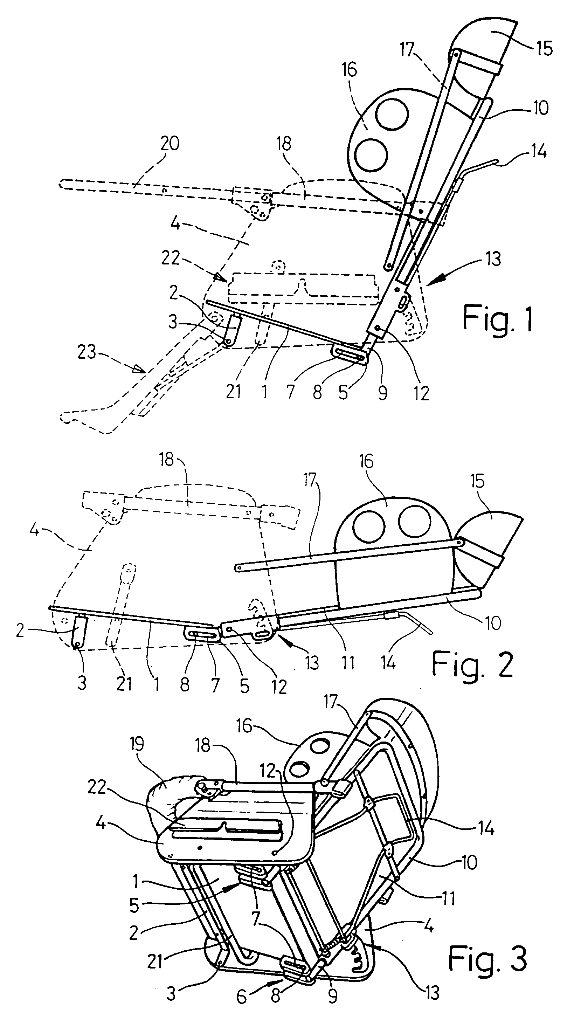

Figure 1 is a side elevation view of the new seat with the backrest up,
Figure 2 is also a side elevation view of the said seat, with the backrest down, and
Figure 3 is a lower rear perspective view of said seat with the backrest up.

According to the drawings, the seat comprises a board 1 on which the corresponding padding will be provided, and which is fixed at the front end thereof and supported on an inverted U-shaped cross member 2 which is pivotably attached by the arms thereof at 3 to the wing members 4 of the pushchair which form the armrests.

At the rear end thereof the board 1 comprises on the underside at each side respective pairs of members 5 and 6 with longitudinal slots 7 in which corresponding spigots 8 move. The spigots are formed on end portions 9 which form lower extensions of the inverted U-shaped frame 10 of the board 11 of the backrest which will be provided with the pertinent padding. The frame is hingedly mounted to the said wing members 4 of the pushchair at points 12 above the portions 9.

As may be seen in the drawings, when the backrest is up the seat will adopt a backwardly inclined position and the slope will be increasing less acute the further the backrest is inclined backwardly until it becomes practically horizontal with the backrest when the latter is fully down.

The backrest comprises a locking device 13 for the different backrest/seat positions, with a control member 14 to change the position and it is completed with a headrest 15 and side lugs 16, the headrest being hingedly associated by way of tiebars 17 with the wing members 4 to achieve rotation of the headrest 15 when the backrest is being folded down.

Respective stringer members 18 on which the front railing 19 or a tray 20 is removably mounted are attached to the wing members 4.

A U-shaped cross member 21 is mounted between the wing members to connect and reinforce them and externally there are means 22 for supporting on the pushchair chassis.

A footrest 23 is hingedly attached to the said members 4.

## Claims

1. Seat for children's pushchairs comprising a seat board (1) and a backrest (11) hingedly disposed between two wing members (4) of the pushchair, characterized in that the seat board (1) is pivotably supported at the front end thereof between said wing members (4), while at the rear it is pivotably connected to the lower region of the frame (10) of the backrest (11) by way of slots (7) below the axis of pivoting (12) of said frame to the wing members of the seat.

2. Seat for children's pushchairs, according to claim 1, wherein the frame (10) of the backrest (11) is laterally extended at the bottom thereof by respective portions (9) provided with transverse spigots (8) which move in the slots (7) of parts (5, 6) fixedly attached laterally to the rear of the seat board (1), so that from the practically horizontal position of the seat when the backrest is down, there is attained a rearwardly sloping position, when the backrest is up.

## Patentansprüche

1. Sitz für Kinderwagen, bestehend aus einer Sitzplatte (1) und einer Rückenlehne (11), mit einem Gelenk angebracht zwischen zwei Seitenteilen (4) des Kinderwagens, dadurch gekennzeichnet, daß sich die Sitzplatte (1) vorne schwenkbar zwischen den erwähnten Seitenteilen (4) abstützt, während das Hinterteil durch Schlitze (7) unter der Schwenkachse (12) des erwähnten Gestells schwenkbar am Unterteil des Gestells (10) der Lehne (11) an den Seitenteilen des Sitzes befestigt ist.

2. Sitz für Kinderwagen nach Anspruch 1, bei dem das Gestell (10) der Lehne (11) seitlich jeweils mit Teilen (9) nach unten verlängert ist, die mit Querstiften (8) ausgestattet sind, die sich in den Schlitzen (7) von Teilen (5, 6) bewegen, welche seitlich fest am Hinterteil der Sitzplatte (1) angebracht sind, so daß der Sitz von seiner praktisch waagerechten Stellung mit abgeklappter Lehne bis zu einer nach hinten geneigten Position mit aufgestellter Lehne verstellt werden kann.

## Revendications

1. Siège de poussettes d'enfant comprenant une plaque (1) de siège et un dossier (11) articulé placés entre les deux parties latérales (4) de la poussette caractérisée par le fait que la plaque (1) du siège pivote en s'appuyant (4) sur sa partie avant entre ces parties latérales (4), cependant que dans sa partie postérieure, elle s'accouple en pivotant sur la zone inférieure du châssis (10) du dossier (11) au moyen de fentes (7) et sous l'axe d'articulation (11) de ce châssis aux parties latérales du siège.

2. Siège de poussettes d'enfant selon la revendication 1, où le châssis (10) du dossier (11) est prolongé latéralement suivant les deux parcours inférieurs (9) avec des chevrons (8) transversaux jouant sur les fentes (7) de pièces (5,6) solidaires latéralement dans la partie postérieure de la plaque (1) de siège de façon à ce que, de la position pratiquement horizontale du siège lorsque le dossier est rabattu, l'on passe à une position inclinée vers sa partie postérieure lorsque le dossier est surélevé.
